# EUROPEAN PATENT APPLICATION

(11) **EP 1 352 824 A1**
(43) Date of publication of application: **15.10.2003**
(21) Application number: 02425215.7
(22) Date of filing: 09.04.2002
(51) Int. Cl.: B62M 3/00

(54) **Bicycle components having coupling portions, and coupling provided thereby**

(71) Applicant: Campagnolo Srl, 36100 Vicenza (VI) (IT)
(72) Inventor: Meggiolan, Mario, 36051 Creazzo (Vicenza) (IT)
(74) Representative: Notaro, Giancarlo

(57) **Abstract**

A bicycle component with at least one male (3), or female (4), coupling zone, defining its own axis (6) and suitable to be coupled to a corresponding coupling zone, female (4) or male (3), of a second bicycle component. The two coupling zones, male (3) and female (4), present respective reciprocal engaging surfaces which have, in a first plane perpendicular to its axis (6), a first profile with different dimensions along at least two directions (X,Y) passing through the aforesaid axis (6) and, in a second plane perpendicular to its axis (6) and spaced apart from the first plane, a second profile also with different dimensions along the two aforesaid directions (X, Y). The dimension of the second profile along at least one of said directions is different from the one of the first profile along the same direction.

## Description

The present invention relates to bicycle components with male coupling zones, bicycle components with female coupling zones and the relative couplings in which the two coupling zones, male and female, present respective reciprocal engaging surfaces and a common coupling axis.

Couplings of this type are used to connect various bicycle components to one another, such as each of the two bicycle pedal cranks to the bottom bracket spindle, or the pedal crank to the pedal spindle associated with it.

In bicycles in general and specifically in racing bicycles there is an increasing need to produce components and couplings which are simultaneously simple, sturdy and light. Simplicity of the component is intended both in the sense of allowing coupling and decoupling of the connected parts with extremely easy and fast operations, and with reference to the simplicity and consequent low cost of the operations required to manufacture the component. Sturdiness is another fundamental characteristic which must be intended both with reference to absolute stability of the connection and to the possibility of guaranteeing the transmission even of high stresses in various stress conditions, such as tractive, bending and torsional stress. Finally, the structure of the coupling component must also be as light as possible, in order to contribute towards maximum efficiency of the bicycle.

In prior art various types of connection devices have been proposed. For example, the Applicant has for some time been manufacturing and marketing bicycle pedal cranks which are coupled to the bottom bracket spindle by means of a device comprising a male element composed of a portion with square section formed on one end of the spindle and a cavity with corresponding profile formed in the pedal crank. The reciprocal engaging of the male element in the cavity guarantees both precision of the assembly position of the pedal crank in relation to the spindle axis, and transmission of bending, shearing and torsional stress between spindle and pedal crank. The axial locking of the pedal crank on the spindle is then guaranteed by a lock screw that engages a threaded axial hole formed in the spindle from its end surface and which has a head that rests against a respective seat formed in the pedal crank.

In the field of spindle-pedal crank coupling devices, other coupling devices are also known, with a male element and a cavity with grooved surfaces, as illustrated for example in EP-A-0 756 991 and before this in FR-A-1 273 107. However, these solutions are not entirely satisfactory, especially as regards simplicity of the manufacturing operations and relative production costs.

Object of the present invention is to produce a coupling component of the type indicated at the beginning of the present description, which is able to satisfy in the best possible manner all the requirements mentioned above.

With a view to attaining this object, the invention relates to a bicycle component with at least one male coupling zone having an own axis and suitable to be coupled with a corresponding female coupling zone of a second bicycle component, the two coupling zones, male and female, presenting respective reciprocal engaging surfaces, characterized in that said male coupling zone presents, in a first plane perpendicular to its axis, a first profile with different dimensions along at least two directions passing through the aforesaid axis and, in a second plane perpendicular to its axis and spaced apart from the first plane, a second profile also having different dimensions along the two aforesaid directions, the dimension of the second profile along at least one of said directions being different from the one of the first profile along the same direction.

According to a second aspect, mirroring the previous one, the invention also relates to a bicycle component with at least one female coupling zone having an own axis and suitable to be coupled with a corresponding male coupling zone of a second bicycle component, the two coupling zones, female and male, presenting respective reciprocal engaging surfaces, characterized in that said female coupling zone presents, in a first plane perpendicular to its axis, a first profile with different dimensions along at least two directions passing through the aforesaid axis and, in a second plane perpendicular to its axis and spaced apart from the first plane, a second profile also having different dimensions along the two aforesaid directions, the dimension of the second profile along at least one of said directions being different from the one of the first profile along the same direction.

Thanks to this characteristic, the component according to the invention, according to both the aforesaid first and second aspects, is able to guarantee the necessary precision and sturdiness of connection, and to allow manufacturing operations relatively simple and at low cost.

According to one embodiment, the aforesaid section perpendicular to the coupling axis varies in shape and/or dimensions along at least one portion of the coupling axis.

In this case, the engaging surface of the male coupling zone has a curved three-dimensional conformation resulting from intersection of a cylindrical peripheral surface, with axis substantially coinciding with the coupling axis, and a curved end surface with an axis of curvature running transversally in relation to the coupling axis. The engaging surface of the female coupling zone is obviously complementary to the aforesaid surface of the male coupling zone.

In a first example of the aforesaid embodiment, the cylindrical peripheral surface has a circular section. It is nonetheless possible to envisage a cylindrical peripheral surface with a section that is not circular, for example a section defining a major axis and a minor axis, such as an ellipse, or flattened oval section, with two curved or rectilinear opposite ends. The axis of curvature of the curved end surface of the aforesaid embodiment is preferably substantially perpendicular to the coupling axis. In general, this curved end surface has a profile defining a conic line, this expression being intended as any line obtained by intersecting a cone with a plane that does not contain the axis of the cone. Specific examples of this embodiment are those in which the profile of the curved end surface is in the form of a parabola, ellipse, hyperbola or arc of a circle.

A particular case with noteworthy advantages from the point of view of simple manufacture is the one in which the cylindrical peripheral surface has a circular section and the curved end surface is in the form of an arc of a circle with a radius of curvature substantially equal to the radius of the circular section of the cylindrical peripheral surface.

Embodiments deriving from those defined above, but with some additional details, are also possible. For example the curved end surface may have flattened top, destined to come into axial contact against a corresponding flattened surface formed in the base of the female coupling zone. Or the curved end surface may have two opposite sides hollowed according to a predetermined profile. Moreover, the peripheral edge of the curved end surface may have a circumferential bevelling.

In another particularly preferred embodiment, the aforesaid engaging surfaces have first engaging portions with the aforesaid coupling section and second engaging portions in a position axially moved in relation to the first portions and which have a circular profile. Said engaging surfaces are dimensioned to couple with interference. In the case mentioned above, with first and second coupling portions, reciprocal engaging of the first portions guarantees the sturdiness and stability of the coupling, especially with reference to the transmission of torsional stresses in relation to the coupling axis of the male element and of the coupling cavity, while the second portions with the circular section guarantee precision of the relative positioning of the two elements, especially with reference to possible misalignments of the axis of the coupling cavity in relation to the axis of the male element.

A particularly advantageous application of the coupling according to the invention is the one relating to the coupling of a bicycle pedal crank to the bottom bracket spindle. Nonetheless, it is evident that the invention is applicable in general to the coupling of any bicycle component.

In the case of application to the spindle-pedal crank coupling, a further preferred aspect of the invention lies in the fact that the major axis of the section of the engaging surface is substantially aligned on the median axis of the pedal crank.

The pedal crank presents an opening for the passage of a lock screw destined to engage a threaded hole formed axially in the spindle from its end surface.

In the aforesaid preferred embodiment, spindle and pedal crank are produced with the same material, in order to avoid any risk of stress corrosion (battery effect) and relative micro-movements that could produce cracks caused by the use of different materials, such as aluminium and steel. The common material chosen for spindle and pedal crank is preferably selected among steel, aluminium or its alloys, or a fabric based on structural fibres incorporated in a matrix of plastic material, said fibres being selected among carbon fibres, glass fibres, aramide fibres, boron fibres, ceramic fibres or any combination of these.

Of course, the invention also relates to a bicycle pedal crank on its own and to a bottom bracket spindle of a bicycle on its own, configured and positioned in such a way to achieve, together with the element coupled to it, a coupling as defined above.

Further characteristics and advantages of the invention shall become clear from the description hereunder with reference to the accompanying drawings, provided purely as a non-limiting example, in which:
- Figure 1 is an exploded perspective view of a pedal crank and a bottom bracket spindle coupled to it, produced according to the invention,
- Figure 2 is a perspective view of the same elements in figure 1, according to a different view, with the pedal crank partly sectioned,
- Figure 3 is a partial perspective view with an enlarged scale of the spindle in figure 1,
- Figures 4, 5 and 6 are an end view and two side views of the spindle in figure 3,
- Figures 7, 8 and 9 are variants of figure 6 and
- Figure 10 is a sectional view according to the line X - X in figure 6.

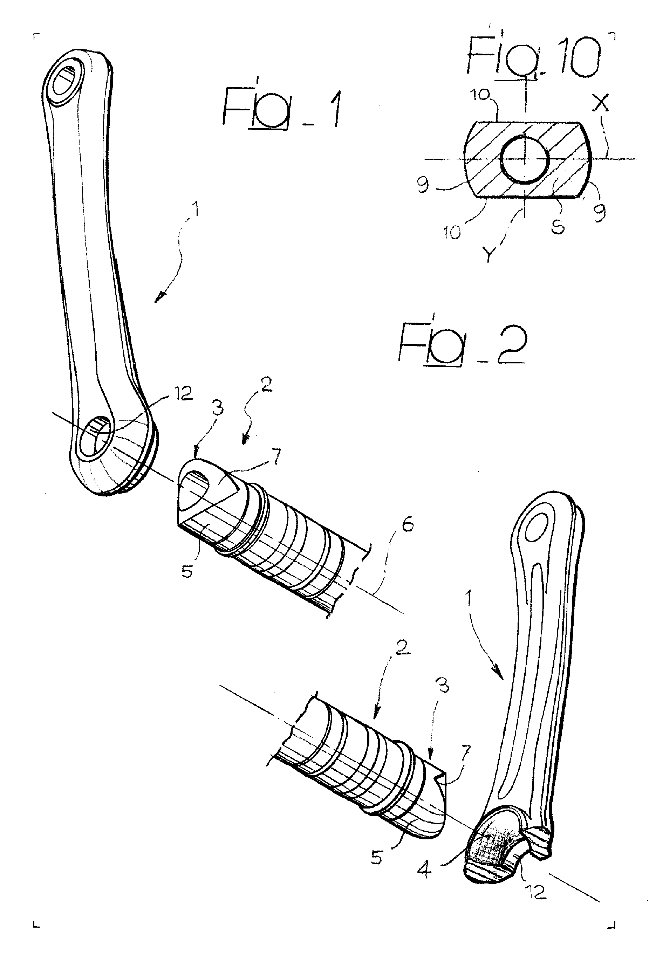

In figure 1, number 1 indicates as a whole a bicycle pedal crank, for example made of aluminium, while reference number 2 indicates as a whole the bottom bracket spindle of the bicycle with an end portion 3 forming a male coupling zone (male element) destined to be received and locked in a female coupling zone (coupling cavity) 4 (figure 2) formed at one end of the pedal crank 1, to rigidly couple the spindle 2 to the pedal crank 1. The example illustrated in the drawings shows a coupling according to the invention with reference to one of the two ends of the spindle 2 and to the relative pedal crank 1.

It is nonetheless evident that the teachings of the invention are applicable to both ends of the spindle 2, to couple said spindle to both the pedal cranks associated to it.

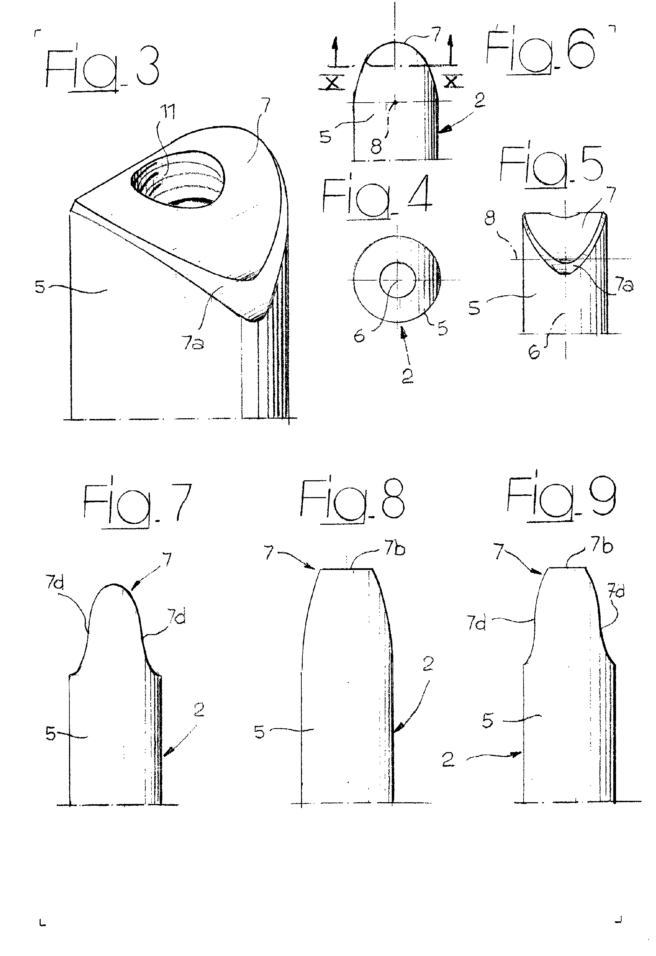

In the case of the specific example illustrated in figures 1-6, the male element formed of the end portion 3, presents a cylindrical peripheral surface 5, with a circular section (see figure 4) presenting an axis coinciding with the axis 6 of the spindle 2. The male element 3 also presents an end surface 7 which is a cylindrical surface with section formed of an arc of a circle, with an axis of curvature 8 that intersects the axis 6 of the spindle 2 orthogonally to it. Therefore, the conformation of the surface of the male element 3 that engages the coupling cavity 4, and obviously the conformation of the engaging surface of this coupling cavity is given by intersecting the peripheral cylindrical surface 5 with the curved surface 7. As a consequence of this conformation, along the terminal end part of the spindle 2, the section of the spindle in a plane perpendicular to the axis 6 presents the conformation shown in figure 10. As can be seen in this figure, the aforesaid section indicated as a whole with S, is a section defining a major axis X and a minor axis Y. In the specific case, the section S has a profile with two curved end sides 9 and two parallel rectilinear sides 10. Moreover, as a consequence of the aforesaid conformation, the section S decreases progressively in the direction of the top of the end surface 7 of the spindle 2.

Of course, the conformation described above is only an example of embodiment, with different variants possible in relation to the aforesaid configuration. Firstly, instead of being circular, the section of the cylindrical peripheral surface 5 may also present a section with a major axis and a minor axis, for example an elliptical or flattened oval section, with curved or rectilinear parallel sides. Secondly, the profile of the end surface 7 with axis of curvature 8 perpendicular to the axis 6 of the spindle may be different from profile formed of an arc of a circle. In general this profile may be a conic line, this term being intended as any line generated by intersecting a cone with a plane not containing the axis of the cone. For example, this profile may be a parabola, a portion of ellipse or a portion of hyperbola. Moreover, the axis 8 may form an angle different from 90° with the axis 6.

Furthermore, as can be seen in figures 3, 5, a circumferential bevelling 7a can be formed along the peripheral edge of the end surface 7. Figure 8 shows a variant in which the top of the curved end surface 7 is flattened, in order to define an end plane 7b destined to come into contact with a corresponding flat end surface of the coupling cavity 4 of the pedal crank 1. Again according to a further possible variant, the two sides of the curved end portion 7 can be hollowed as shown in figure 7 or in figure 9 to produce profiles 7d with a predetermined conformation.

In the specific case of application illustrated here, to obtain maximum performance in the transmission of torsional stresses between spindle 2 and pedal crank 1, it is important that in the coupled condition the major axis X of the coupling section S of the spindle 2 is aligned with the median longitudinal direction of the pedal crank 1.

As can be seen in the drawings, at each of its ends the spindle presents a threaded axial hole 11 for engaging a fixing screw (not shown) that is fitted into a through-hole 12 of the pedal crank and which has a head destined to engage a corresponding seat in the pedal crank, in order to clamp the coupling between spindle and pedal crank which is in any case a coupling with interference produced by the reciprocal engaging surfaces 5, 7. Preferably, the opening 12 is formed of a threaded hole with a larger diameter than the hole 11, into which a screw extractor tool can be screwed in order to press the spindle 2 out of the cavity 4 in the pedal crank when the pedal crank requires to be decoupled from the spindle.

It is important to observe that, while to the end surface 7 with transversal section S is assigned the task of transmitting torsional stresses between spindle and pedal crank, to the portion of the spindle with circular section, which engages the corresponding portion of the coupling cavity 4 with circular section, is assigned the task of guaranteeing perfect assembly position of the pedal crank in relation to the spindle, avoiding possible misalignments between the axis of the spindle and the axis of the coupling cavity.

As it is evident from the above description, the coupling device according to the invention presents advantages from the point of view of stability and sturdiness of the connection, from the point of view of simple manufacture and easy assembly, and finally from the point of view of lightness. The elements described above are manufactured with conventional production operations, such as numeric control turning or milling.

The material chosen for the spindle and for the pedal crank is preferably the same and may be metal, (steel or aluminium), or a fabric based on structural fibres incorporated in a matrix of plastic material, with fibres selected among carbon fibres, glass fibres, aramide fibres, boron fibres, ceramic fibres or any combination of these.

Finally, the invention described above is not limited to the application illustrated relative to the coupling between the bottom bracket spindle and a bicycle pedal crank. The same principles illustrated above are also applicable to the coupling of other bicycle components, such as the coupling of a pedal crank with the pedal spindle associated with it, or also to other bicycle components.

Of course, without prejudice to the principle of the invention, the constructional details and embodiments may vary widely in relation to what is described and illustrated herein purely as an example, without however departing from the scope of the present invention as defined in the accompanying claims. For example, the male coupling zone may be associated to a pedal crank and the female coupling zone to a bottom bracket spindle.

## Claims

**1.** Bicycle component with at least one male coupling zone (3), having an own axis (6) and suitable to be coupled to a corresponding female coupling zone (4) of a second bicycle component, the two coupling zones, male and female (3, 4) presenting respective reciprocal engaging surfaces, **characterized in that** said male coupling zone (3), in a first plane perpendicular to its axis (6), presents a first profile with different dimensions along at least two directions (X, Y) passing through the aforesaid axis (6) and, in a second plane perpendicular to its axis and spaced apart from the first plane, a second profile also having different dimensions along the two aforesaid directions (X, Y), the dimension of the second profile along at least one of said directions being different from the one of the first profile along the same direction.

**2.** Bicycle component with at least one female coupling zone (4) having an own axis (6) and suitable to be coupled to a corresponding male coupling zone (3) of a second bicycle component, the two coupling zones, female and male (3, 4), presenting respective reciprocal engaging surfaces, **characterized in that** said female coupling zone (4), in a first plane perpendicular to its axis (6), presents a first profile with different dimensions along at least two directions (X, Y) passing through the aforesaid axis and, in a second plane perpendicular to its axis and spaced apart from the first plane, a second profile also having different dimensions along the two aforesaid directions (X, Y), the dimension of the second profile along at least one of said directions being different from the one of the first profile along the same direction.

**3.** Component according to claim 1 or 2, **characterized in that** said first profile is substantially symmetrical in relation to said axis (6).

**4.** Component according to claim 3, **characterized in that** said profile is elliptical or flattened oval, with the two longer sides curved or rectilinear.

**5.** Component according to claim 3, **characterized in that** said profile presents two opposite sides rectilinear and parallel.

**6.** Component according to claim 1 or 2, **characterized in that** the conformation of said second profile is different from the first profile.

**7.** Component according to claim 1 or 2, **characterized in that** the conformation of said second profile is substantially equal, apart from its different dimension, to the first profile.

**8.** Component according to claim 1 or 2, **characterized in that** it presents a plurality of profiles, on a plurality of planes perpendicular to said axis, the dimension of each profile along at least one of said directions differing from those of the other profiles along the same direction.

**9.** Component according to claim 8, **characterized in that** at least said dimension increases from the profile at the far end of said male coupling zone (3).

**10.** Component according to claim 8, **characterized in that** at least said dimension decreases from the profile at the far end of said female coupling zone (4).

**11.** Component according to claim 8, **characterized in that** said coupling zone (3, 4) has a curved three-dimensional conformation resulting from the intersection of a cylindrical peripheral surface (5), with axis (6) substantially coinciding with said axis of said coupling zone (3, 4) and a curved end surface (7) with a transversal axis of curvature in relation to said axis.

**12.** Component according to claim 11, **characterized in that** the cylindrical peripheral surface (5) has a circular profile.

**13.** Component according to claim 11, **characterized in that** the cylindrical peripheral surface (5) has a profile defining a major axis and a minor axis.

**14.** Component according to claim 13, **characterized in that** the cylindrical peripheral surface (5) has an elliptical or flattened oval shaped profile, with two opposite sides curved or rectilinear.

**15.** Component according to claim 11, **characterized in that** the curved end surface (7) has a axis of curvature (8) substantially perpendicular to said axis (6) of said coupling zone.

**16.** Component according to claim 11 or 15, **characterized in that** the curved end surface (7) has a profile defined by a conic line.

**17.** Component according to claim 16, **characterized in that** the curved end surface (7) has a profile that is a parabola.

**18.** Component according to claim 16, **characterized in that** the curved end surface (7) has a profile that is a portion of ellipse.

**19.** Component according to claim 16, **characterized in that** the curved end surface (7) has a profile that is a portion of hyperbola.

**20.** Component according to claim 16, **characterized in that** the curved end surface (7) has a profile that is an arc of circle.

**21.** Component according to claim 20, in which said cylindrical peripheral surface (5) has a circular profile, **characterized in that** the curved end surface (7) in the form of an arc of a circle has a radius of curvature substantially identical to the radius of the circular profile of the cylindrical peripheral surface (5).

**22.** Component according to claim 11, **characterized in that** the curved end surface (7) has a flattened top.

**23.** Component according to claim 11, **characterized in that** the curved end surface (7) has two opposite sides hollowed according to a predetermined profile.

**24.** Component according to any one of the claims from 1 to 23, **characterized in that** it is a bottom bracket spindle (2) of a bicycle and **in that** said male coupling zone (3) is one of its ends.

**25.** Spindle according to claim 24, **characterized in that** said male coupling zone (3) is also present at its second end.

**26.** Spindle according to claim 24, **characterized in that** the terminal part of said end (3) presents a bevelling (7a).

**27.** Spindle according to claim 24, **characterized in that** said end (3) is linked to the central body of the spindle.

**28.** Spindle according to claim 24, **characterized in that** it presents threaded axial holes (11) at its two ends for engaging fixing screws, and that said holes have threads with same directions.

**29.** Spindle according to claim 24, **characterized in that** it presents threaded axial holes (11) at its two ends for engaging fixing screws, and that said holes have threads with opposite directions.

**30.** Component according to any of the claims from 2 to 23, **characterized in that** it is a bicycle pedal crank (1) and **in that** said female coupling zone (4) is formed at one of its ends.

**31.** Pedal crank according to claim 30, **characterized in that** it presents said female coupling zone (4) also at its second end.

**32.** Pedal crank according to claim 30, **characterized in that** the larger dimension of said first profile is substantially aligned with the median axis of the pedal crank (1).

**33.** Pedal crank according to claim 30, **characterized in that**, adjacent to said female coupling zone (4), it presents a zone with a substantially circular profile destined to couple with the body of a spindle (2).

**34.** Pedal crank according to claim 30, **characterized in that** it presents an end wall and **in that** said female coupling zone (4) is immediately adjacent to said end wall.

**35.** Pedal crank according to claim 34, **characterized in that** said end wall presents a peripheral bevelling.

**36.** Pedal crank according to claim 30, **characterized in that** it presents an opening (12) for passing of a lock screw destined to engage a threaded hole (11) formed axially in a spindle (2) from its end surface.

**37.** Pedal crank according to claim 36, **characterized in that** said opening is formed of a threaded hole (12) with larger diameter than the aforesaid hole (11) for engaging the lock screw, said threaded hole (12) with larger diameter formed in the pedal crank being destined to be engaged by a screw extractor tool to press the end surface of the spindle out of the pedal crank when the spindle (2) and pedal crank (1) are required to be decoupled.

**38.** Coupling between a first bicycle component with at least one male coupling zone (3) having an own axis (6) and a second bicycle component with at least one female coupling zone (4) having an own axis (6), the two coupling zones, male and female (3, 4), presenting respective reciprocal engaging surfaces, **characterized in that** the axis (6) of the male coupling zone (3) substantially coincides with the axis (6) of the female coupling zone (4) and **in that** said coupling zones present, in a first plane perpendicular to their axis, a first profile with different dimensions along at least two directions (X, Y) passing through the aforesaid axis and, in a second plane perpendicular to their axis and spaced apart from said first plane, a second profile also having different dimensions along the two aforesaid directions (X, Y), the dimension of the second profile along at least one of said directions being different from the one of the first profile along the same direction.

**39.** Coupling according to claim 38, **characterized in that** the aforesaid engaging surfaces are dimensioned in order to couple with interference.

**40.** Coupling according to claim 38, **characterized in that** the aforesaid engaging surfaces have first engaging portions with the aforesaid profile and second engaging portions, in a position axially moved in relation to the first portions, with a substantially circular profile.

**41.** Coupling according to claim 40, **characterized in that** both the aforesaid first portions, and the aforesaid second portions of the engaging surfaces are dimensioned in order to couple with interference.

**42.** Coupling according to claim 38, **characterized in that** the two coupling elements are made of the same material.

**43.** Coupling according to claim 42, **characterized in that** said material is selected among aluminium, aluminium alloys, steel, fabric based on structural fibres incorporated in a matrix of plastic material, said fibres being selected among carbon fibres, glass fibres, aramide fibres, boron fibres, ceramic fibres or any combination of these.

**51.** Coupling according to any one of the claims from 38 to 43, **characterized in that** the first component is a bottom bracket spindle (2) of a bicycle and the second component is a bicycle pedal crank (1).

**52.** Bottom bracket of a bicycle comprising a spindle according to any one of the claims from 24 to 29.
